# EUROPEAN PATENT APPLICATION

(11) **EP 1 925 955 A1**
(43) Date of publication of application: **28.05.2008**
(21) Application number: 07022322.7
(22) Date of filing: 16.11.2007
(51) Int. Cl.: G02B 6/00, G11B 17/04, G11B 33/10, H04N 5/64, H05K 5/02

(54) **Disc playback apparatus and light-guiding structure**

(30) Priority: 22.11.2006 JP 2006316207
(71) Applicant: Funai Electric Co., Ltd., Daito-shi, Osaka 574-0013 (JP)
(72) Inventor: Maruta, Naoto, Daito-shi Osaka 574-0013 (JP)
(74) Representative: Grünecker, Kinkeldey, Stockmair & Schwanhäusser Anwaltssozietät

(57) **Abstract**

The light-guiding structure has the hole 50b penetrating the housing 50, the LED 40a which emits light along the inner wall of the housing 50, and the light-guiding member 60. The light-guiding member 60 has the light entrance 61, the light guide 62 which extends along the inner wall of the housing toward the hole 50b from the light entrance 61, the extending part 64 which bends from the light guide 62 and extends to the outside through the hole 50b, the reflecting surface 63 which is formed at the outer corner of the bend between the light guide 62 and the extending part 64, and the light exit 65 which permits the light, which has been guided by the light guide 62, the reflecting surface 63, and the extending part 64, to emerge toward the outside.

## Description

### Technical Field to which the Invention Belongs

The present invention relates to an optical disc playback apparatus and a light-guiding structure.

### Related Background Art

It has been common practice to provide the opening of a disc drive unit, through which a disc is retracted and ejected, with a lighting means that illuminates the opening's surrounding and the disc tray for users' convenience of operation in the dark.

Such practice actually consists of allowing light to radiate from the end of the opening for disc retraction and ejection, said light being guided to the point of radiation through a light-guiding member from a light source mounted on the circuit board in the main body, as disclosed in Japanese Patent Application Laid-open No. 2003-022667. Another method consists of illuminating the disc guide (for light emission therefrom) with light from a light source having a prism, said light being guided through the disc tray after reflection by a reflector, as disclosed in Japanese Patent Application Laid-open No. 2004-014004.

The recent tendency toward space saving and improved performance dictates size reduction of electric and electronic appliances. This applies also to a disc drive which has only a limited space (several millimeters) between the disc drive housing and the disc loader as the result of space saving in the housing. Such a disc drive will be user-friendly if it has a disc retracting and ejecting port which is easily visible in the dark or it has a disc tray which shows its own movement to the user. Needless to say, any electric and electronic appliances are often required to have an illuminating device in the limited space therein in order that the user easily recognizes the position and state of parts in operation.

The technology disclosed in Japanese Patent Application Laid-open No. 2003-022667 mentioned above is designed to arrange several members between the housing and the disc loader; therefore, it cannot be used in the instance where there exists only a small space (several millimeters) between the housing and the disc loader. Similarly, the technology disclosed in Japanese Patent Application Laid-open No. 2004-014004 mentioned above needs a space between the housing and the disc loader because the disc tray has to be illuminated with light emerging from the light source.

### Disclosure of the Invention

The present invention was completed in view of the foregoing. It is an object of the present invention to provide a light-guiding structure and an optical disc playback apparatus equipped therewith. The former lets the latter's user know the working and location of the latter's components even though there is only a limited space for the light source to be installed between the housing and the disc loader.

The present invention discloses a light-guiding structure, comprising: a hole penetrating a housing, a light source that emits light along a inner wall of the housing, and a light-guiding member having an entrance for the light, a light guide that extends from the light entrance to the hole along the inner wall of the housing and further extends outward through the hole, and a light exit that emits outward the light guided by the light guide.
In the light-guiding structure constructed as mentioned above, the light emerging from the light source along the inner wall of the housing enters the entrance of the light-guiding member, reaches the exit of the light-guiding member through the light guide, and leaves outward from the housing through the light exit. In other words, the light-guiding structure guides light along the inner wall of the housing and hence it is able to guide internally emerging light outward even though there exists only a limited space along the inner wall of the housing.

An optional aspect of the present invention provides a light-guiding structure, wherein: the light entrance has a light diffusing structure to diffuse incoming light into the light-guiding member. The diffused light emerges from the entire surface of the light exit, thereby allowing it to glow.

An optional aspect of the present invention provides The light-guiding structure wherein: the light entrance has a concave surface to diffuse the incoming light in a plane parallel to the inner wall of the housing The concave formed at the light entrance refracts light in conformity to its shape, thereby diffusing light inside the light-guiding member. Thus, the diffused light emerges from the entire surface of the light exit, thereby allowing it to glow.

An optional aspect of the present invention provides a light-guiding structure wherein: the light entrance has a multifaceted surface, so that the incoming light is diffused in the light guide. Thus, the diffused light emerges from the entire surface of the light exit, thereby allowing it to glow.

An optional aspect of the present invention provides a light-guiding structure wherein: the light entrance has an embossed surface, so that the incoming light is irregularly diffused in the light guide. Thus, the diffused light emerges from the entire surface of the light exit, thereby allowing it to glow.

An optional aspect of the present invention provides a light-guiding structure which has a fixing structure to fix a circuit board, on which is mounted the light source, in such a way that a mounting surface of the circuit board faces the inner wall of the housing. Arrangement in this way prevents the LED light from leaking inside the housing.

An optional aspect of the present invention provides a light-guiding structure wherein: the light source is a chip light emitting diode (LED), which is small in size and desirable for mounting in a limited space in the housing.

An optional aspect of the present invention provides a light-guiding structure wherein: the light-guiding member is made of optical clear plastic, which facilitates fabrication.

An optional aspect of the present invention provides a light-guiding structure wherein the hole has a wide, approximately rectangular shape and the light guide and the light exit are so formed as to conform to the shape of the hole. In other words, the light emerging opening may be a wide rectangular one, so that it is readily visible to the user.

An optional aspect of the present invention provides a light-guiding structure wherein: the hole has a wide, approximately rectangular shape, the housing has formed therein a disc retracting and ejecting hole parallel to said hole, the disc loader is arranged near inside of the disc retracting and ejecting opening and the hole, and the light source emits light in response to a movement of the disc loader. In other words, the present invention is applicable to any disc playback apparatus which emits light as the disc loader moves even though it has only a limited space between the disc loader and the housing which are close to each other.

One aspect of the present invention provides A disc playback apparatus comprising: an approximately rectangular hole that penetrates a housing, an opening for disc retraction and ejection that penetrates the housing and has a shape with width and height that are approximately equal to a disc tray to hold an optical disc thereon, a disc loader to retract and eject the disc tray, which is arranged inside a inner wall of the housing and in proximity to the opening for disc retraction and ejection and the rectangular hole, a chip light emitting diode (LED) that emits light toward the rectangular hole along the inner wall of the housing, and a light-guiding member that guides light emerging from the chip LED to the outside of the rectangular hole along the inner wall of the housing, said light-guiding member comprising: a light entrance with a concave surface formed thereon that diffuses incoming light along a plane parallel to the inner wall of the housing, a light guide in a form of flat plate parallel to the inner wall of the housing, which guides the incoming light toward the rectangular hole, a bent part formed by bending the light guide at approximately right angles toward the rectangular hole, an extending part that extends from the bent part to the outside of the housing, a reflecting surface that is formed by cutting obliquely an outer corner of the bent part, and a fixing structure to attach a circuit board, on which is mounted the chip LED, to the inner wall of the housing, with a mounting side thereof facing the inner wall of the housing.

These and other features, aspects, and advantages of the invention will be apparent to those skilled in the art from the following detailed description of preferred non-limiting exemplary embodiments, taken together with the drawings and the claims that follow.

### Brief Description of the Drawings

It is to be understood that the drawings are to be used for the purposes of exemplary illustration only and not as a definition of the limits of the invention. Throughout the disclosure, the word "exemplary" is used exclusively to mean "serving as an example, instance, or illustration." Any embodiment described as "exemplary" is not necessarily to be construed as preferred or advantageous over other embodiments.
Referring to the drawings in which like reference character(s) present corresponding parts throughout:
Fig. 1 is a block diagram showing the electrical construction of a television set of combination type.
Fig. 2 is a sectional view (showing the housing and the disc drive) taken in the vertical direction along the line passing through the center of the disc loader extending in the rightward and leftward directions.
Fig. 3 is a perspective view showing the light-guiding member attached to the housing.
Fig. 4 is a plan view of the light-guiding member.
Fig. 5(a) is a side view of the light-guiding member, and Fig. 5(b) is a sectional view of the light-guiding member taken in the direction from front to rear along the line which passes through the center of the light-guiding member extending in the rightward and leftward directions.
Fig. 6 is a plan view showing the positional relation among the circuit board, the light-guiding member, and the housing.

### Description of Special Embodiments

The detailed description set forth below in connection with the appended drawings is intended as a description of presently preferred embodiments of the invention and is not intended to represent the only forms in which the present invention may be constructed and or utilized.
The embodiment of the present invention will be described below in order.
(1) Configuration of television set of combination type
(2) Arrangement of parts around the disc loader
(3) Construction of the light-guiding member
(4) Summary

### (1) Configuration of television set of combination type

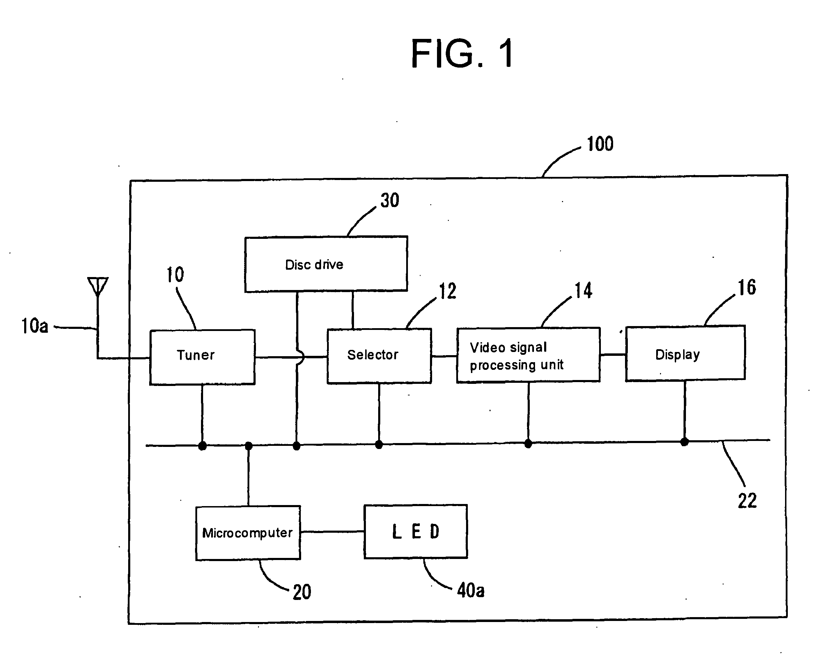

The following description of the present invention will be made with reference to Figs. 1 to 6. Fig. 1 is a block diagram illustrating the electrical configuration of a television set of combination type 100 which is equipped with the optical disc playback apparatus conforming to the present invention. The optical disc playback apparatus mentioned herein as one embodiment of the present invention may be applied to any optical disc playback apparatus without the function of television reception or with the function of recording on an optical disc. The light-guiding structure may be applied to any electrical appliance which includes not only the optical disc playback apparatus but also any electronic machines (such as home appliance and information processing machine) which are limited in internal space.

The television set of combination type 100 shown in Fig. 1 is a television receiver having the functions of optical disc playback and television broadcast reception. It is comprised of a tuner 10, a selector 12, a video signal processing unit 14, a display 16, a microcomputer 20, a disc drive 30, and an LED 40. These components (except for the last two) are connected to one another through an IIC bus which is a serial communication bus for their mutual communications.
The microcomputer 20 has therein such components as CPU, ROM, RAM, and I/O. The CPU executes programs stored in the ROM while using the RAM as the work area, thereby controlling the television set 100 entirely. The microcomputer 20 switches the selector 12 so that signals to the video signal processing circuit are delivered from the tuner or the disc drive. The microcomputer 20 also switches the selector 12 so that signals to the audio signal processing circuit (not shown) are delivered from the tuner or the disc drive.

The tuner 10 is connected to the U/V antenna l0a to receive television broadcast signals. It tunes with signals of desired frequencies in the television broadcasting band under control by the microcomputer 20. Then, it selects desired signals from received signals and sends them out after RF amplification and IF conversion. The IF signals for NTSC are composite video signals composed of brightness signal, color signal, and sync signal.

The disc drive 30 under control by the microcomputer 20 directs a light beam to the recording surface of an optical disc (such as CD and DVD) and receives a reflected light beam from the optical disc for playback of information recorded on the optical disc. Reproduced video and audio signals are converted into signal format suitable for interpretation by the video signal processing unit, and they are sent to the selector 12 after amplification. The disc drive 30 has a disc tray on which is placed an optical disc and also has a drive mechanism to retract and eject it through a disc entrance and exit which is formed in the housing of the television set of combination type 100. The disc drive may be of slot-in type.

The video signal processing unit 14 has a pixel number converting circuit, a picture quality adjusting circuit, and an output processing circuit, and it performs signal processing on the video signals entered from the selector 12 and sends out the processed signals to the driver. Upon receipt of video signals, the pixel number converting circuit performs scaling process on them to generate RGB signals for one image to be displayed on the liquid crystal panel. The picture quality adjusting circuit processes RGB signals (which have undergone scaling process by the pixel number converting circuit) for adjustment of brightness, contrast, black balance, white balance, and sharpness. The output processing circuit processes RGB signals (which have undergone picture quality adjustment) for gamma correction and dithering; it also adds background signals, OSD signals, and blanking signals and sends the resulting signals to the display which displays images.

The display 16 is constructed of a liquid crystal panel and a driver circuit to drive this liquid crystal panel. The driver circuit generates driving signals according to video signals entered from the video signal processing unit 14, so that the driving signals drive individual pixels in the liquid crystal panel. The liquid crystal display 16 may be replaced by any one of plasma display, picture tube (combined with a driving circuit, vertical deflection circuit, and horizontal deflection circuit), DMD (which generates video light to be projected onto a screen), and color wheel (combined with control circuits to drive it).

### (2) Arrangement of parts around the disc loader

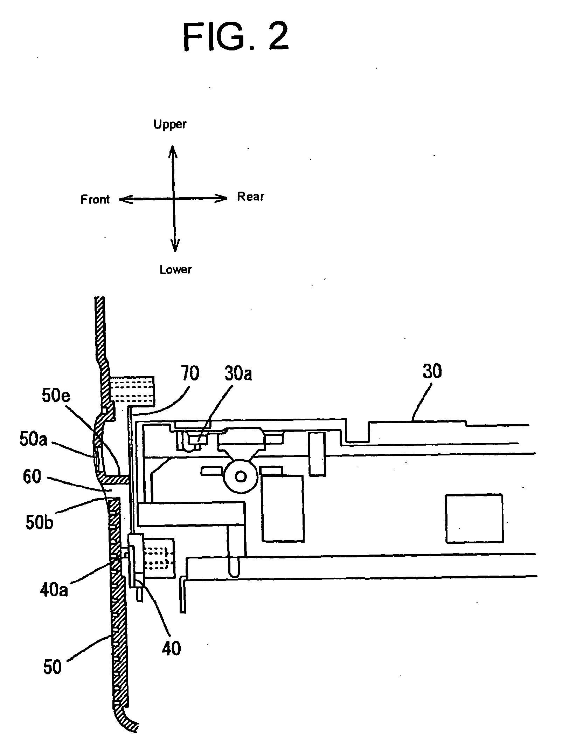

The television set of combination type 100 has the disc drive 30 placed in its housing 50, as shown in Fig. 2. Fig. 2 is a sectional view (showing the housing 50 and the disc drive 30) taken in the vertical direction along the line passing through the center of the disc loader 30a.

The housing 50 and the disc drive 30 are close to each other, only several millimeters (4 to 6 mm) apart. In this limited space is arranged the light-guiding member 60 and the covering plate 70. The light-guiding member 60 extends downward beyond the lower end of the disc drive 30. At the lower end of the light-guiding member 60 is the LED 40a adjoining it.

The light-guiding member 60 is a thin, wide object stretching right and left and having a small thickness in the direction of front to rear. The thickness is smaller than the gap between the disc drive 30 and the housing 50 (which is about 2.5 mm in the case of this embodiment). The width (in the direction of right to left) is smaller than the width of the opening 50a for disc retraction and ejection. (In the case of this embodiment, it is about 40 mm, which is about one third of the width of the opening 50a). Also, the light-guiding member 60 extends upward from the lower end of the disc drive 30 along the inner wall of the housing 50, and it bends toward the front side at the point behind the hole 50b formed in the housing 50 and then extends to the surface of the housing 50 through the hole 50b, so that its end appears outside the housing 50.

The hole 50b takes on a rectangular shape having a width equal to the width of the light-guiding member 60 and having a height equal to the thickness of the light-guiding member 60. It is formed near (or below in the case of this embodiment) the opening 50a for disc retraction and ejection. The hole 50b is slightly wider and higher than the light-guiding member 60 so that the former allows the latter to pass through.

The opening 50a for disc retraction and ejection, which is formed in the housing 50, is wide and high enough for the disc tray to pass through when it is retracted and ejected by the disc loader 30a. In the space between the opening 50a and the light-guiding member 60 is the rib 50e which projects backward from the inner wall of the housing 50. The rib 50e prevents the light leaking from the light-guiding member 60 from entering the disc tray. The shield plate 70 (which is in contact with the rear end of the rib 50e) may be arranged approximately parallel to the inner wall of the housing 50, so that the rib 50e and the shield plate 70 enclose the upper and rear parts of the light-guiding member 60. This arrangement prevents the light leaking from the light-guiding member 60 from reaching the disc drive 30. This produces the effect of increasing the contrast of the light which passes through the light-guiding member 60 and then emerges from the light emerging opening 65 (mentioned later).

The LED 40a as the light source is mounted on the circuit board 40, which is fastened in the board fastening space 66 (mentioned later). Since the circuit board 40 is arranged, with its mounting side facing the inner wall of the housing 50, the LED 40a faces the inner wall of the housing 50. This arrangement reduces further the leakage of light toward the disc drive 30. The LED 40a of chip type saves space necessary for its mounting. Other elements than LED, which are mounted on the circuit board 40, should preferably be those of chip type having a small height.

### (3) Construction of the light-guiding member

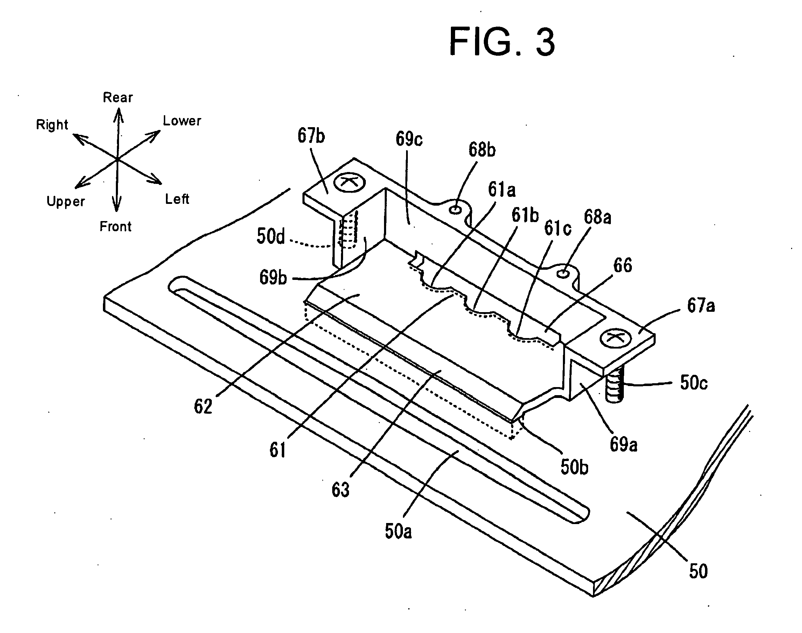

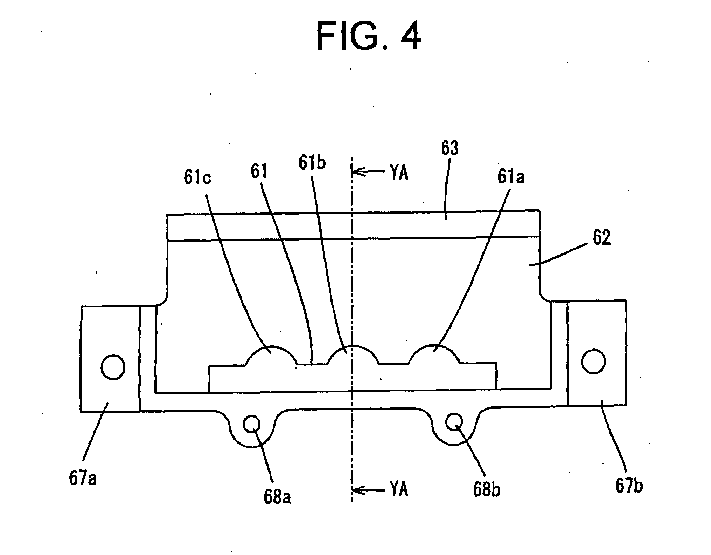

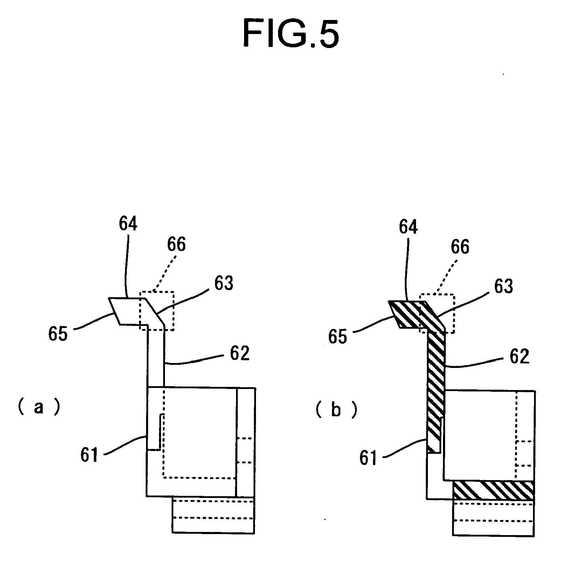

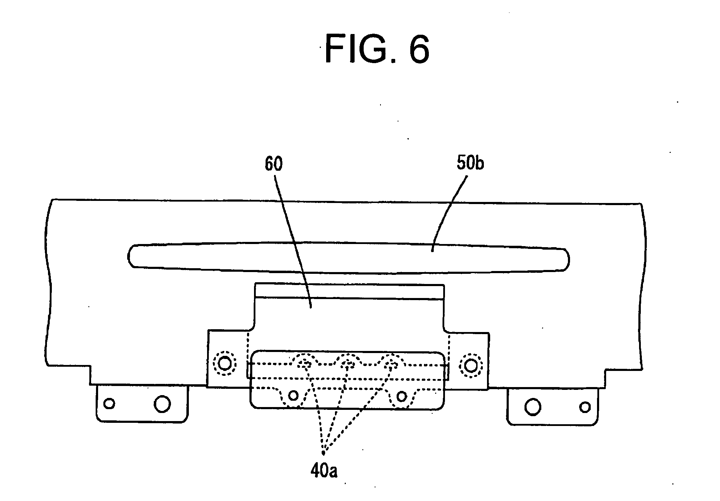

The following is a detailed description of the light-guiding member 60 and its mounting structure as shown in Figs. 3 to 6. Fig. 3 is a perspective view showing the light-guiding member 60 attached to the housing 50. Fig. 4 is a plan view showing the light-guiding member 60. Fig. 5(a) is a side view of the light-guiding member 60. Fig. 5(b) is a sectional view taken in the direction from front to rear along the line YA-YA in Fig. 4 which passes through the center of the light-guiding member 60. (The center is on the line extending in the rightward and leftward directions). Fig. 6 is a plan view showing the positional relation among the circuit board 40, the light-guiding member 60, and the housing 50.

The light-guiding member 60 is made of optical clear plastic capable of transmitting light. It includes such constituents as light entrance 61, light guide 62, reflecting surface 63, extending part 64, light exit 65, space 66 for the circuit board to be fixed therein, fins 67a and 67b, and screw holes 68a and 68b.

The light entrance 61 is a flat plate (capable of transmitting light) which is formed on the end surface of the light-guiding member 60. It is arranged such that the LED 40a on the circuit board 40 emits light toward it. The light guide 62 continues from the light entrance 61 so as to guide the incident light from the light entrance 61 toward the reflecting surface 63. The extending part 64 bends at approximately right angles and extends from the light guide 62. The bent part has its outer corner cut flat aslant at about 45° with respect to the surface of the extending part 62. The cut flat surface functions as the reflecting surface 63. The reflecting surface 63 directs the reflected light toward the extending part 64. The extending part 64 ends with the surface which is almost flush with the outer surface of the housing, and this end surface forms the light exit 65.

The foregoing embodiment is characterized by that the extending part 64 bends at about right angles from the light guide 62 so that the angle between the reflecting surface 63 and the light guide 62 is about 45°. However, any other angle than 45° may be acceptable. An adequate angle is about α/2, where α represents an angle between the light guide 62 and the extending part 64. Incidentally, "light guide" may be used as a term that embraces the light guide 62, the reflecting surface 63, and the extending part 64.

The light guide 62 has upwardly extending walls 69a, 69b, and 69c, with the former two extending from its right and left ends and the latter one extending from its rear end. (The wall 69c is partly absent at its lower center where the light entrance 61 is formed.) The walls 69a and 69b are formed at a position which is below the lower end of the disc drive 30 so that they do not interfere with the disc drive 30. These three walls 69a, 69b, and 69c extend to a prescribed height so that they do not interfere with the disc drive 30. The left wall 69a has the fin 67a which projects leftward at a prescribed height, and the right wall 69b has the fin 67b which projects rightward at a prescribed height. The lower wall 69c is formed continuously rightward and leftward at the front concave side, with a space of prescribed length being left at the center between it and the inner wall of the housing 50.

At each center of the fins 67a and 67b is formed a screw hole. The bosses 50c and 50d, each having a screw hole matching with the screw hole in the fin, are formed integrally with the inner wall of the housing 50. In other words, the bosses 50c and 50d are fastened to the fins 67a and 67b, respectively, with screws passing through the screw holes. In this way, the light-guiding member 60 is fixed to the housing 50.

The vertical wall 69c has screw holes 68a and 68b which are formed a certain distance apart in the lower lateral side at the center of a line extending in the rightward and leftward directions. In other words, the screw holes 68a and 68b receive screws from the inner wall of the housing 50. The circuit board 40 has holes at positions corresponding to these screw holes 68a and 68b. Thus, the circuit board 40 is fixed to the circuit board fixing space 66 which is at the lower part of the light guide 60. To do so, the circuit board 40 is crewed backward from the housing, with the holes of the circuit board 40 matching with the screw holes 68a and 68b and also with the mounting side of the circuit board 50 facing the housing 50 and being placed in the concave of the vertical wall 59c. The fixing of the circuit board 40 may be accomplished easily before the light-guiding member 60 is fixed to the housing 50. Thus, the vertical wall 69c and the screw holes 68a and 68b permit the circuit board to be fixed in such a way that its mounting side (on which the LED 40a is mounted) faces the inner wall of the housing.

Because of the foregoing structure, light coming into the light entrance 61 from the LED 40a goes through the light guide 62 until it is reflected into the direction of the extending part 64 by the reflecting surface 63, and the reflected light goes through the extending part 64 and emerges from the exit 65, so that the light from the LED 40a is visible to the user who watches the exit 65 from the outside of the housing 50.

Incidentally, the light entrance 61 may have the light diffusers 61a, 61b, and 61c formed therein. The light diffusers diffuse incoming light from the LED 40a in the rightward and leftward directions in the light guide 62, thereby making light emerging from the light exit 65 uniformly diffuse in the rightward and leftward directions. The result is that the light exit 65 is made to glow comparatively uniformly by a limited number ofLEDs. The light diffuser may have a practical structure as explained in the following.

The first structure of the light diffuser is a curved surface which is wider than the light flux of LED 40a. This curved surface is concave to the light guide 62 so that it deflects the light flux of the LED 40 in the rightward and leftward directions. That is, it diffuses the incident light in a fan shape through the light guide 62.

The second structure of the light diffuser is a multifaceted surface formed at the light entrance 61. An example of the multifaceted surface may resemble the diamond cuts. It diffuses incident light regularly. It may be combined with the curved surface (as the first structure).

The third structure of the light diffuser is an embossed surface formed at the light entrance 61. It may be combined with the curved surface (as the first structure).

### (4) Summary

The light-guiding structure according to the present invention is comprised of the hole 50b penetrating the housing 50, the LED 40a which emits light along the inner wall of the housing 50, and the light-guiding member 60. The light-guiding member 60 has the light entrance 61, the light guide 62 which extends along the inner wall of the housing toward the hole 50b from the light entrance 61, the extending part 64 which bends from the light guide 62 and extends to the outside through the hole 50b, the reflecting surface 63 which is formed at the outer corner of the bend between the light guide 62 and the extending part 64, and the light exit 65 which permits the light, which has been guided by the light guide 62, the reflecting surface 63, and the extending part 64, to emerge toward the outside. The light-guiding structure constructed as mentioned above lets the user know the working and location of the internal and external components even though there is only a limited space for the light source to be installed between the housing and the disc loader or the like. It can be applied to the optical disc playback apparatus.

The present invention is not limited to the embodiments mentioned above, and it may be so modified as to change the combination of mutually substitutable parts and structures, which are disclosed in the foregoing embodiment, to change the combination of mutually substitutable parts and structures, which are not disclosed in the foregoing embodiment, and mutually substitutable parts and structures, which are known, or to change or replace the parts, which are disclosed in the foregoing embodiment, by or with any parts or structures which are conceivable by those skilled in the art as the substituents of the parts or structures disclosed in the foregoing embodiment.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art.

It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.

## Claims

1. A disc playback apparatus, comprising:
an approximately rectangular hole that penetrates a housing;
an opening for disc retraction and ejection that penetrates the housing and has a shape with width and height that are approximately equal to a disc tray to hold an optical disc thereon; and
a disc loader to retract and eject the disc tray, which is arranged inside an inner wall of the housing and in proximity to the opening for disc retraction and ejection and the rectangular hole;
**characterized in that** the disc playback apparatus comprises:
a chip light emitting diode (LED) that emits light toward the rectangular hole along the inner wall of the housing; and
a light-guiding member that guides light emerging from the chip LED to the outside of the rectangular hole along the inner wall of the housing;
said light-guiding member comprising:
a light entrance with a concave surface formed thereon that diffuses incoming light along a plane parallel to the inner wall of the housing;
a light guide in a form of flat plate parallel to the inner wall of the housing, which guides the incoming light toward the rectangular hole;
a bent part formed by bending the light guide at approximately right angles toward the rectangular hole;
an extending part that extends from the bent part to the outside of the housing,
a reflecting surface that is formed by cutting obliquely an outer corner of the bent part; and
a fixing structure to attach a circuit board, on which is mounted the chip LED, to the inner wall of the housing, with a mounting side thereof facing the inner wall of the housing.

2. A light-guiding structure, comprising:
a hole penetrating a housing; and
a light source that emits light along a inner wall of the housing;
**characterized in that** the light guiding structure comprises:
a light-guiding member having an entrance for the light, a light guide that extends from the light entrance to the hole along the inner wall of the housing and further extends outward through the hole, and a light exit that emits outward the light guided by the light guide.

3. The light-guiding structure as defined in Claim 2, wherein:
the light entrance has a light diffusing structure to diffuse incoming light into the light-guiding member.

4. The light-guiding structure as defined in Claim 2 or 3, wherein:
the light entrance has a concave surface to diffuse the incoming light in a plane parallel to the inner wall of the housing.

5. The light-guiding structure as defined in any of Claims 2 to 4, wherein:
the light entrance has a multifaceted surface.

6. The light-guiding structure as defined in any of Claims 2 to 4, wherein:
the light entrance has an embossed surface.

7. The light-guiding structure as defined in any of Claims 2 to 6, which has a fixing structure to fix a circuit board, on which is mounted the light source, in such a way that a mounting surface of the circuit board faces the inner wall of the housing.

8. The light-guiding structure as defined in any of Claims 2 to 7, wherein:
the light source is a chip light emitting diode (LED).

9. The light-guiding structure as defined in any of Claims 2 to 8, wherein:
the light-guiding member is made of optical clear plastic.

10. The light-guiding structure as defined in any of Claims 2 to 9, wherein
the hole has a wide, approximately rectangular shape and the light guide and the light exit are so formed as to conform to the shape of the hole.

11. The light-guiding structure as defined in any of Claims 2 to 10, wherein:
the hole has a wide, approximately rectangular shape, the housing has formed therein a disc retracting and ejecting hole parallel to said hole, the disc loader is arranged near inside of the disc retracting and ejecting opening and the hole, and the light source emits light in response to a movement of the disc loader.
